# EUROPEAN PATENT APPLICATION

(11) **EP 1 912 072 A1**
(43) Date of publication of application: **16.04.2008**
(21) Application number: 06781951.6
(22) Date of filing: 28.07.2006
(51) Int. Cl.: G01N 35/02

(54) **MIXING DEVICE AND ANALYSIS DEVICE HAVING THE MIXING DEVICE**

(30) Priority: 03.08.2005 JP 2005225868; 03.08.2005 JP 2005225869
(71) Applicant: Olympus Corporation, Tokyo 151-0072 (JP)
(72) Inventor: MURAKAMI, Miyuki c/o Olympus Corporation, Tokyo 151-0072 (JP)
(74) Representative: von Hellfeld, Axel
(86) International application number: PCT/JP2006/315041
(87) International publication number: WO 2007/015438

(57) **Abstract**

An agitation apparatus (20) that agitates a liquid by radiating a sound wave and an analyzing apparatus. The agitation apparatus (20) includes a liquid holder (6a) that holds a liquid, and a surface-acoustic-wave element (22) that is arranged outside a wall (6b) of the liquid holder and makes a sound wave (Wa) directed in two mutually plane-symmetrical directions inclined relative to the wall (6b) incident on the wall. The surface-acoustic-wave element (22) generates the sound wave from such a position that a plane of symmetry (Ps) of the sound wave is displaced from a central axis (Ac) of the liquid holder (6a).

## Description

### TECHNICAL FIELD

The present invention relates to an agitation apparatus and an analyzing apparatus provided with the agitation apparatus.

### BACKGROUND ART

It is conventionally known that, for efficiently agitating a liquid held in a very small vessel using ultrasounds, a peaked sound field must be formed in the liquid and the ultrasounds must be transmitted to the liquid from an ultrasound generator with little attenuation. For this purpose, for example, in one known agitation apparatus used in an analyzing apparatus to agitate a liquid with sound waves, at least one sound wave generator is arranged at the bottom of a vessel holding a liquid to generate ultrasound of at least 10 MHz, and a solid material is arranged in a direction of ultrasound propagation. The ultrasound comes into the liquid through the solid material to generate a sound flow which agitates the liquid (see, Patent Document 1, for example).

Patent Document 1: German Patent No. 10325307

### DISCLOSURE OF INVENTION

### PROBLEM TO BE SOLVED BY THE INVENTION

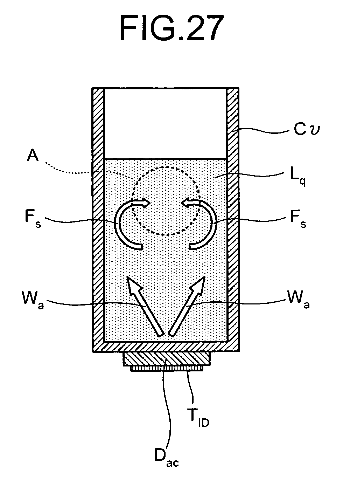

The analyzing apparatus disclosed in Patent Document 1 employs a surface acoustic wave (SAW) element including an interdigital transducer (IDT) formed on a piezoelectric substrate as a sound wave generator. The interdigital transducer emits surface acoustic waves in both right and left directions from the center thereof. Therefore, as shown in FIG. 27, sound waves Wa generated by an interdigital transducer T_{ID} of a surface-acoustic-wave element Dac propagate through a bottom wall of a vessel Cv and enter a liquid Lq at an angle relative to an inner surface of the bottom wall as indicated by arrows. Therefore, when the vessel has a very small capacity of, for example, not more than a few tens µL and has a very small or thin shape, and if the surface-acoustic-wave element Dac is arranged at the center of the bottom wall of the vessel, the sound waves are reflected by inner side walls and sound flows generated by the sound waves are also reflected by the inner surfaces following the reflection of the sound wave. As a result, two symmetrical sound flows Fs generated are reflected by the inner side walls to collide and offset with each other in the liquid Lq in the vessel to generate a stagnant area A where the flows become stagnant, thereby hampering a uniform agitation of the liquid by the sound flows Fs.

In view of the above, an object of the present invention is to provide an agitation apparatus and an analyzing apparatus that can uniformly agitate a held liquid without generating a stagnant area in the held liquid even when an amount of the liquid held in a liquid holder is very small and the liquid holder is very small or thin.

### MEANS FOR SOLVING PROBLEM

To solve the problems as described above and to achieve an object, an agitation apparatus for agitating a liquid by radiating a sound wave according to claim 1, includes a liquid holder that holds a liquid, and a sound wave generator that is arranged at an outer side of a wall of the liquid holder to make sound waves directed in two mutually plane-symmetrical directions each at an angle with the wall incident on the wall, wherein the sound wave generator generates the sound wave from such a position that a plane of symmetry of the sound wave is displaced from a central axis of the liquid holder.

Further, in the agitation apparatus according to the present invention as recited in claim 2, there is a plurality of the sound wave generators, and a frequency of the sound wave generated by one of the sound wave generators is different from a frequency of the sound wave generated by another one of the sound wave generators adjacent to the one in a direction of propagation of the sound wave.

Further, in the agitation apparatus according to the present invention as recited in claim 3, any two adjacent sound wave generators aligned in the direction of propagation of the sound wave have a different central frequency from each other.

Further, in the agitation apparatus according to the present invention as recited in claim 4, there is a plurality of the liquid holders, and a distance from a center of sound wave generation to a central axis of each of the liquid holders is different in each of the sound wave generators.

Further, the agitation apparatus according to the present invention as recited in claim 5, further includes a frequency setting unit that sets a frequency of the sound wave generated by the sound wave generator, and the frequency setting unit changes over time the frequency of the sound wave generated by the sound wave generator.

Further, in the agitation apparatus according to the present invention as recited in claim 6, the frequency setting unit changes the frequency of the sound wave generated by the sound wave generator according to one of a property and an amount of the liquid to be agitated.

Further, in the agitation apparatus according to the present invention as recited in claim 7, the frequency setting unit performs one of modulation of the sound wave generated by the sound wave generator and frequency sweep and frequency switching of the frequency of the sound wave generated by the sound wave generator.

Further, in the agitation apparatus according to the present invention as recited in claim 8, the frequency setting unit changes the frequency of the sound wave generated by the sound wave generator between a resonance frequency and an antiresonant frequency.

Further, the agitation apparatus according to the present invention as recited in claim 9, further includes a position controller that changes a relative position of the sound wave generator relative to the liquid holder.

Further, in the agitation apparatus according to the present invention as recited in claim 10, the position controller changes the relative position of the sound wave generator relative to the liquid holder that holds a liquid to be agitated according to one of a property and an amount of the liquid to be agitated.

Further, in the agitation apparatus according to the present invention as recited in claim 11, the position controller moves a position of the liquid holder relative to the sound wave generator.

Further, in the agitation apparatus according to the present invention as recited in claim 12, the sound wave generator is a surface-acoustic-wave element that generates a surface acoustic wave as the sound wave.

Further, to solve the problems as described above and to achieve an object, an analyzing apparatus according to claim 13 analyzes a reaction liquid by agitating and causing a reaction of plural different types of liquids using the agitation apparatus as described above.

### EFFECT OF THE INVENTION

The agitation apparatus according to the present invention is advantageous in that the agitation apparatus can uniformly agitate a liquid held in the liquid holder without generating a stagnant area in the held liquid by generating asymmetric sound flows in the liquid held in the liquid holder even when the amount of the liquid held in the liquid holder is very small and the liquid holder is very small or very thin. Further, since the analyzing apparatus of the present invention includes the agitation apparatus as described above, the analyzing apparatus is advantageous in that it can uniformly agitate the liquid held in the liquid holder without generating a stagnant area in the held liquid even when the amount of liquid held in the liquid holder is very small and the liquid holder is very small or very thin.

### BRIEF DESCRIPTION OF DRAWINGS

FIG. 1 is a schematic configuration diagram of an automatic analyzing apparatus according to the present invention provided with an agitation apparatus according to a first embodiment;
FIG. 2 is a vertical sectional view of the automatic analyzing apparatus along line C-C of FIG. 1;
FIG. 3 is a plan view of a surface-acoustic-wave element forming a part of the agitation apparatus of the present invention;
FIG. 4 is an enlarged view of FIG. 2 showing reaction recesses and surface-acoustic-wave elements arranged at an outer side of a bottom wall so that a plane of symmetry of sound waves is displaced from a central axis of the reaction recess;
FIG. 5 is a diagram of a section of one unit of the agitation apparatus in the automatic analyzing apparatus shown in FIG. 2 and a driving circuit;
FIG. 6 is a vertical sectional view of the automatic analyzing apparatus after a reaction wheel rotates from a position shown in FIG. 2 while a time period t1 elapses;
FIG. 7 is a vertical sectional view of the automatic analyzing apparatus after the reaction wheel rotates from a position shown in FIG. 6 while a time period t2 elapses;
FIG. 8 is a sectional view for explaining changes in an interval between sound waves that are incident on the liquid from a bottom surface of the reaction recess of the reaction wheel according to changes in a driving frequency of the surface-acoustic-wave element;
FIG. 9 is a sectional view for explaining changes in an interval between sound waves that are incident on the liquid from the bottom surface of the reaction recess according to the changes in the driving frequency of the surface-acoustic-wave element, and asymmetrical sound flows generated in the reaction recess;
FIG. 10 is a sectional view for explaining changes in an interval between sound waves that are incident on the liquid from the bottom surface of the reaction recess when the driving frequencies of the adjacent surface-acoustic-wave elements are set to different frequencies, and asymmetrical sound flows generated in the reaction recess;
FIG. 11 is a sectional view of a modification of the surface-acoustic-wave element;
FIG. 12 is a schematic configuration diagram of an automatic analyzing apparatus according to the present invention including an agitation apparatus according to a second embodiment;
FIG. 13 is a horizontal sectional view of a portion including a reaction wheel and a liquid bath in the automatic analyzing apparatus shown in FIG. 12;
FIG 14 is a horizontal sectional view of the portion including the reaction wheel and the liquid bath in the automatic analyzing apparatus shown in FIG. 12 before the analyzing apparatus comes to a position shown in FIG. 13;
FIG. 15 is a horizontal sectional view of the portion including the reaction wheel and the liquid bath in the automatic analyzing apparatus shown in FIG. 12 after the automatic analyzing apparatus rotates from the position shown in FIG. 13;
FIG. 16 is a perspective view of an agitation apparatus according to a third embodiment;
FIG. 17 is a back view of a microplate of the agitation apparatus shown in FIG. 16 on which vibrators of surface-acoustic-wave elements are arranged;
FIG. 18 is an enlarged perspective view of a surface-acoustic-wave element used in the microplate shown in FIG. 16;
FIG .19 is a partial sectional view of the microplate along a plane running through the center of a well in a longitudinal direction of the microplate;
FIG. 20 is a schematic diagram for explaining an interval between the wells arranged on the microplate and a center-to-center distance between the surface-acoustic-wave element and the well;
FIG. 21 is a bottom view of a first modification of the microplate used in the agitation apparatus according to the third embodiment;
FIG. 22 is an enlarged view of a portion A of the microplate shown in FIG. 21;
FIG. 23 is a diagram for explaining changes in a width of incidence of sound waves on the well according to changes in an attached position of the vibrator in the microplate shown in FIG. 21;
FIG. 24 is a bottom view showing an arrangement of the wells and the vibrators of the surface-acoustic-wave elements on the microplate used in the agitation apparatus according to the third embodiment;
FIG. 25 is an enlarged view of a portion B of FIG. 24;
FIG. 26 is a sectional view of a modification of the agitation apparatus of the present invention; and
FIG. 27 is a sectional view showing an arrangement of an interdigital transducer of a surface-acoustic-wave element in a vessel of a conventional agitation apparatus, and a stagnant area of a flow caused by symmetrical sound flows generated in a liquid in the vessel.

### EXPLANATIONS OF LETTERS OR NUMERALS

- 1: Automatic analyzing apparatus
- 2: Work table
- 3: Specimen table
- 3a: Storage chamber
- 4: Specimen vessel
- 5: Specimen dispensing mechanism
- 6: Reaction wheel
- 6a: Reaction recess
- 7: Driving mechanism
- 8: Light source
- 9: Light-receiving element
- 11: Discharge device
- 12: Reagent dispensing mechanism
- 13: Reagent table
- 13a: Storage chamber
- 14: Reagent vessel
- 15: Reader device
- 16: Control unit
- 17: Analyzing unit
- 18: Input unit
- 19: Display unit
- 20: Agitation apparatus
- 21: Liquid bath
- 22: Surface-acoustic-wave element
- 22a: Piezoelectric substrate
- 22b: Vibrator
- 22c: Electric terminal
- 22d: Busbar
- 23: Driving circuit
- 24: Agitation controller
- 25: Oscillator
- 26: Amplifier
- 27: Wire
- 28: Frequency setting unit
- 29: Position controller
- 30: Agitation apparatus
- 31: Liquid bath
- 40: Agitation apparatus
- 41: Power transmission element
- 41a: RF transmission antenna
- 41b: Driving circuit
- 41c: Controller
- 43: Surface-acoustic-wave element
- 43a: Piezoelectric substrate
- 43b: Vibrator

- 43c: Antenna
- 45, 46: Microplate
- 45a: Main body
- 45b, 46b: Well
- 45c, 46c: Bottom surface
- 48: Microplate
- 48b: Well
- 48c: Bottom surface
- 49: Agitation vessel
- 49a: Main body
- 49b: Recess
- 49c: Side wall
- Ci: Center of vibrator
- F11 to F45: Sound flow
- Fa: Sound flow
- Fcc, Fcw: Sound flow
- L: Liquid
- Lm: Acoustic matching agent
- Ls: Liquid sample
- Ps: Plane of symmetry
- W1, W2: Width of incidence
- Wa: Sound wave

### BEST MODE(S) FOR CARRYING OUT THE INVENTION

### [First Embodiment

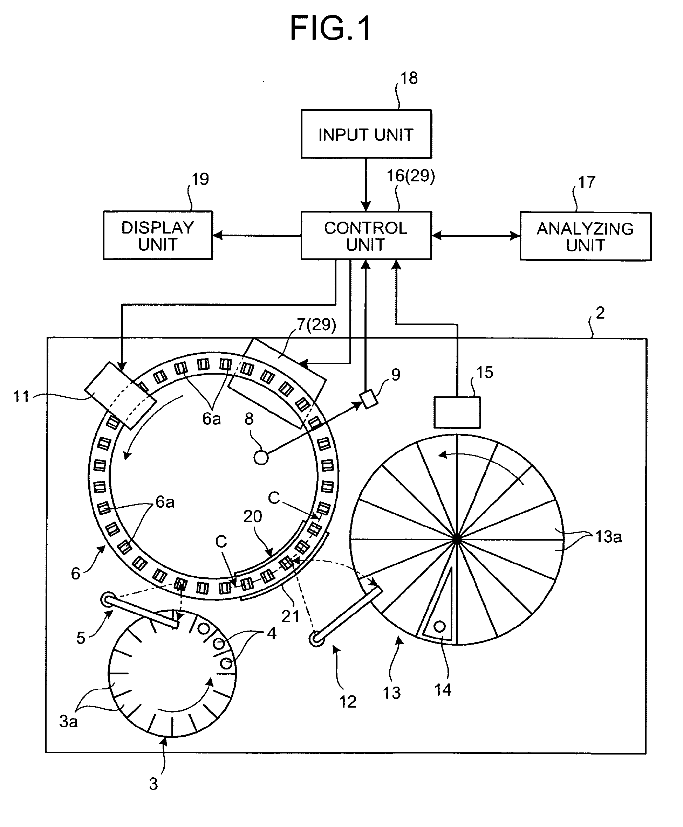

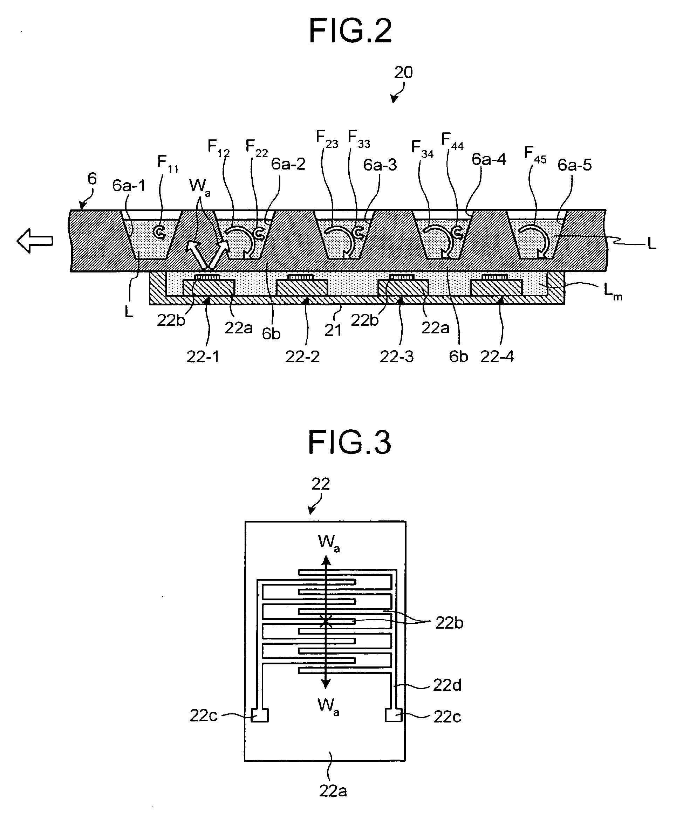

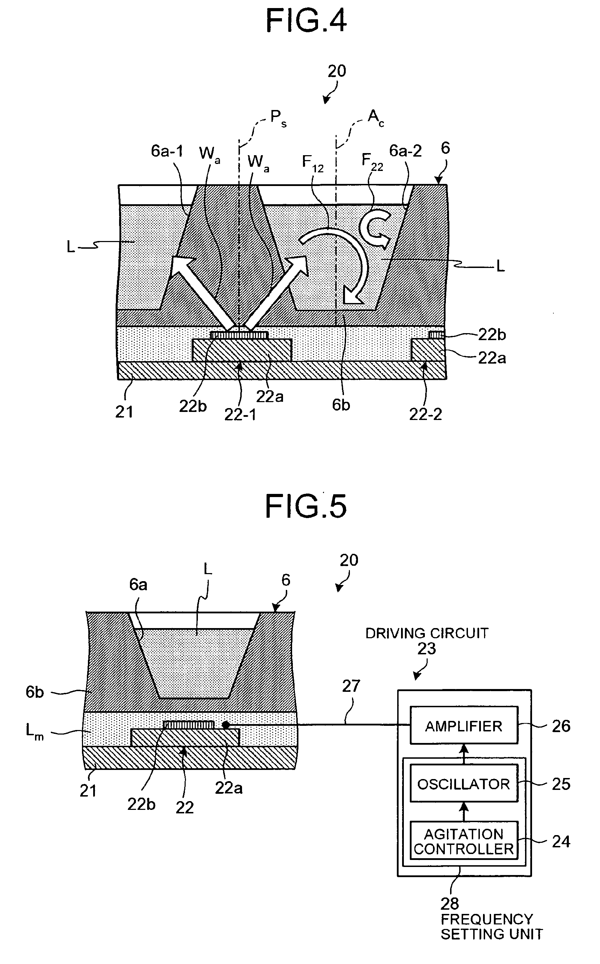

An agitation apparatus and an analyzing apparatus according to a first embodiment of the present invention will be described in detail below with reference to the accompanying drawings. FIG. 1 is a schematic configuration diagram of an automatic analyzing apparatus according to the present invention including the agitation apparatus according to the first embodiment. FIG. 2 is a vertical sectional view of the automatic analyzing apparatus along line C-C of FIG. 1. FIG. 3 is a plan view of a surface-acoustic-wave element forming a part of the agitation apparatus according to the present invention. FIG. 4 is an enlarged view of the reaction recesses and the surface-acoustic-wave elements arranged on an outer side of a bottom wall so that a plane of symmetry of sound waves is displaced from a central axis of a reaction recess. FIG. 5 is a diagram showing a section of one unit of the agitation apparatus in the automatic analyzing apparatus shown in FIG. 2 and a driving circuit. The drawings referred to in the description are formulated mainly for the description of the configuration of the present invention, and dimensions are not always accurate.

As shown in FIG. 1, an automatic analyzing apparatus 1 includes, on a work table 2, a specimen table 3, a reaction wheel 6, a driving mechanism 7, and a reagent table 13 separate from each other so that each can rotate in a circumferential direction and be stopped at any position. In the automatic analyzing apparatus 1, a specimen dispensing mechanism 5 is arranged between the specimen table 3 and the reaction wheel 6, a reagent dispensing mechanism 12 is arranged between the reaction wheel 6 and the reagent table 13, and an agitation apparatus 20 is arranged below the reaction wheel 6 in the vicinity of the reagent dispensing mechanism 12.

As shown in FIG. 1, the specimen table 3 is rotated by a driving unit (not shown) in a direction indicated by an arrow, and includes plural storage chambers 3a arranged equiangularly along an outer circumference. A specimen vessel 4 holding a specimen is placed in each storage chamber 3a in a detachable manner.

The specimen dispensing mechanism 5 is means for dispensing the specimen, and an operation thereof is controlled by a control unit 16 so that the specimen dispensing mechanism 5 sequentially dispenses the specimens in the plural specimen vessels 4 on the specimen table 3 to reaction recesses 6a on the reaction wheel 6.

The reaction wheel 6 is, as shown in FIG. 1, a wheel, which also serves as a vessel, made of a transparent material and rotated in a direction indicated by an arrow by a driving unit. On the reaction wheel 6, plural reaction recesses 6a serving as liquid holders are arranged equiangularly. In each of the plural reaction recesses 6a, side walls facing a radial direction of the reaction wheel 6 are parallel with each other, whereas side walls facing the circumferential direction are inclined so that a distance therebetween decreases toward a bottom as shown in FIG. 2. Further, a light source 8 is arranged at an internal side of the reaction wheel 6, and a discharge device 11 is arranged outside the outer circumference of the reaction wheel 6. The light source 8 emits analytical light (of 340 to 800 nm) for analyzing a reaction liquid in the reaction recess 6a produced as a result of reaction between the reagent and the specimen. Light beams emitted from the light source 8 for analysis pass through the reaction liquid in the reaction recess 6a and are received by a light-receiving element 9 arranged opposite to the light source 8. On the other hand, the discharge device 11, whose operation is controlled by the control unit 16, includes a discharge nozzle to suck the reaction liquid after the photometry from the reaction recess 6a and to discharge the sucked reaction liquid to a discharge vessel. After passing through the discharge device 11, the reaction recess 6a is transported to a washing device not shown as the reaction wheel 6 rotates. After an interior of the reaction recess 6a is washed, the reaction recess 6a is used again for the analysis of another specimen.

The driving mechanism 7, whose operation is controlled by the control unit 16, drives the reaction wheel 6 to rotate and to change a relative position of the reaction recess 6a with respect to a surface-acoustic-wave element 22. The driving mechanism 7 has an encoder which detects a rotated position of the reaction wheel 6 with high precision. The driving mechanism 7 cooperates with the control unit 16 and thereby forming a position controller 29 which controls and changes the relative position of the reaction recess 6a with respect to the surface-acoustic-wave element 22 with high precision.

The reagent dispensing mechanism 12 is means for dispensing a reagent, and an operation thereof is controlled by the control unit 16 so that the reagent dispensing mechanism 12 sequentially dispenses the reagent in a predetermined reagent vessel 14 on the reagent table 13 into the reaction recess 6a on the reaction wheel 6.

The reagent table 13 is, as shown in FIG. 1, rotated in a direction indicated by an arrow by a driving unit (not shown), and includes plural storage chambers 13a formed in a fan-like shape along a circumferential direction. The reagent vessel 14 is placed in each storage chamber 13a in a detachable manner. Each of the plural reagent vessels 14 is filled with a predetermined reagent corresponding to each examination item, and a bar-code label (not shown) is pasted on an outer surface to indicate information concerning the contained reagent.

A reader device 15 is arranged outside an outer circumference of the reagent table 13 to read out the information recorded in the bar-code label attached to the reagent vessel 14, such as a type, a lot, and a valid date of the reagent, and to output the read information to the control unit 16. The control unit 16 is connected to the specimen dispensing mechanism 5, the driving mechanism 7, the light-receiving element 9, the discharge device 11, the reagent dispensing mechanism 12, the reader device 15, an analyzing unit 17, an input unit 18, a display unit 19, and the like. The control unit 16 is, for example, a microcomputer which has a memory function to store a result of analysis. The control unit 16 controls operations of respective units of the automatic analyzing apparatus 1 such as a rotated position of the reaction wheel 6, and further controls the automatic analyzing apparatus 1 to restrict an analyzing operation or to give warning to an operator when the lot or the valid date of the reagent is not within a set range based on the information read out from the record on the bar-code label.

The analyzing unit 17 is connected to the light-receiving element 9 via the control unit 16, analyzes constituent concentration and the like of the specimen according to an absorbancy of a liquid sample in the reaction recess 6a based on intensity of light received by the light-receiving element 9, and outputs the result of analysis to the control unit 16. The input unit 18 is a unit performing an operation to input the examination item and the like into the control unit 16, and is, for example, a keyboard or a mouse. The display unit 19 displays contents of the analysis, a warning, and the like, and is a display panel, for example.

The agitation apparatus 20 is an agitation apparatus which agitates a liquid by irradiating the liquid with sound waves. As shown in FIGS. 1, 2, and 5, the agitation apparatus 20 includes the reaction wheel 6, the plural surface-acoustic-wave elements 22, a driving circuit 23 that drives the surface-acoustic-wave element 22, and the position controller 29. The plural surface-acoustic-wave elements 22 are arranged in a liquid bath 21 which holds an acoustic matching agent Lm such as gel and liquid, and disposed at the side of a bottom surface of the reaction wheel 6. The liquid bath 21 is fixed on the work table 2 below the reaction wheel 6. The acoustic matching agent Lm between the reaction wheel 6 and the surface-acoustic-wave element 22 is adjusted so that a thickness thereof is a product of an odd number and 1/4 of a wavelength λ of a frequency emitted by the surface-acoustic-wave element 22, or that acoustic matching agent Lm is as thin as possible, in order to enhance the transmission efficiency of the sound waves to a wall surface of the reaction wheel 6.

The surface-acoustic-wave element 22 is a sound wave generator which simultaneously radiates the sound waves to two reaction recesses 6a positioned in a direction of propagation of the sound waves. As shown in FIG. 3, the surface-acoustic-wave element 22 includes a piezoelectric substrate 22a made of lithium niobate (LiNbO3) or the like and a vibrator 22b including an interdigital transducer (IDT) disposed on the piezoelectric substrate 22a. The vibrator 22b has plural digital electrodes formed in a comb-like shape and converts driving signals transmitted from the driving circuit 23 into surface acoustic waves (sound waves). The vibrator 22b is connected to an electric terminal 22c by a busbar 22d which serves as a shared electrode. The vibrator 22b emits sound waves Wa in two directions from the center in a direction of arrangement of the interdigital electrodes as indicated by arrows in FIG. 3. The sound waves Wa emitted in two directions from the vibrator 22b leak out into the acoustic matching agent Lm, and propagate through the acoustic matching agent Lm to enter the reaction wheel 6 through a bottom wall 6b. The surface-acoustic-wave element 22 is arranged between two adjacent reaction recesses 6a as shown in FIG. 4. More specifically, the surface-acoustic-wave element 22 is arranged outside the bottom wall 6b in such a manner that a plane of symmetry Ps of the sound waves Wa is displaced from a central axis Ac of the reaction recess 6a. Therefore, the sound waves Wa generated by the surface-acoustic-wave element 22, more specifically, the sound waves Wa generated by a surface-acoustic-wave element 22-1 of FIG. 2 are inclined relative to the bottom wall 6b, and are incident on the bottom wall 6b in two mutually plane-symmetrical directions as shown in FIG. 4. The sound waves Wa emitted from the surface-acoustic-wave element 22 is planar and comes into the bottom wall 6b planarly. Therefore, a line normal to the bottom wall 6b and passing through a middle point between two incoming directions of sound waves represents the plane of symmetry Ps.

The driving circuit 23 is a driving unit that drives the surface-acoustic-wave element 22, and includes an agitation controller 24, an oscillator 25, and an amplifier 26 as shown in FIG. 5. The driving circuit 23 is connected to the electric terminal 22c by a wire 27. In FIG. 5, one unit of the agitation apparatus 20, i.e., one reaction recess 6a is shown in section together with the driving circuit 23, and the driving circuit 23 is shown as if it drives only one surface-acoustic-wave element 22. However, the plural surface-acoustic-wave elements 22 shown in FIG. 2 are actually connected to the driving circuit 23 in series or in parallel, or are connected to the driving circuit 23 via a switch for driving.

As the agitation controller 24, an electronic control unit (ECU) embedded with a memory and a timer is employed so as to control driving signals of the surface-acoustic-wave element 22. The agitation controller 24 controls the oscillator 25 so as to control, for example, characteristics (such as frequency, strength, phase, and wave characteristic), waveform (such as sine wave, triangular wave, rectangular wave, and burst wave), modulation (such as amplitude modulation and frequency modulation), and the like of the sound waves generated by the surface-acoustic-wave element 22. Further, by changing the frequency of oscillation signals generated according to the incorporated timer by the oscillator 25 over time, the agitation controller 24 can perform frequency sweep or frequency switching of the oscillation signals, for example, and accordingly, the agitation controller 24 can perform frequency sweep or frequency switching of the frequency of the sound waves generated by the surface-acoustic-wave element 22.

The oscillator 25 and the agitation controller 24 form a frequency setting unit 28. The oscillator 25 has an oscillating circuit which can change the oscillating frequency in a programmable manner based on control signals from the agitation controller 24. The oscillator 25 outputs high-frequency oscillation signals of approximately a few tens MHz to a few hundreds MHz to the amplifier 26. The frequency setting unit 28 sets the frequency of the sound waves generated by the surface-acoustic-wave element 22 and changes the frequency over time, for example, between resonance frequency and antiresonant frequency.
The frequency is changed according to property such as viscosity and specific gravity of a liquid to be agitated or amount of the liquid.

The amplifier 26 amplifies the oscillation signals supplied by the oscillator 25 and outputs the resulting signals as driving signals to the surface-acoustic-wave element 22. Further, the amplifier 26 can switch the driving frequency of the driving signals stepwise based on the control signals from the agitation controller 24.

The position controller 29 includes the driving mechanism 7 and the control unit 16, and changes the relative position of the reaction recess 6a holding the liquid to be agitated relative to the surface-acoustic-wave element 22 according to the property such as viscosity and specific gravity of the liquid to be agitated or the amount of the liquid.

In the automatic analyzing apparatus 1 configured as described above, the specimen dispensing mechanism 5 sequentially dispenses the specimens in the plural specimen vessels 4 on the specimen table 3 into the reaction recesses 6a transported in the circumferential direction by the rotating reaction table 6. After the specimen is dispensed, the reaction recess 6a is transported to the vicinity of the reagent dispensing mechanism 12 according to the rotation of the reaction wheel 6. Then, the reagent is dispensed from the predetermined reagent vessel 14. In the reaction recess 6a in which the reagent is dispensed, the reagent and the specimen are agitated by the agitation apparatus 20 and react while the reaction recess 6a is transported in the circumferential direction according to the rotation of the reaction wheel 6. The reaction recess 6a passes between the light source 8 and the light-receiving element 9. While passing therethrough, the liquid sample in the reaction recess 6a is subjected to photometry by the light-receiving element 9, and the analyzing unit 17 analyzes the constituent concentration and the like. After the analysis is finished, the discharge device 11 discharges the reaction liquid in the reaction recess 6a. The reaction recess 6a is washed by the washing device not shown and used again for the analysis of a specimen.

In the agitation apparatus 20, while the reaction wheel 6 rotates in the direction indicated by an arrow as shown in FIG. 2, each surface-acoustic-wave element 22 simultaneously radiates the sound waves to two adjacent reaction recesses 6a positioned above the liquid bath 21. Position at which the sound waves emitted from the surface-acoustic-wave element 22 are incident on the bottom wall and into the reaction wheel 6 changes depending on the relative position of the reaction recess 6a which moves as the reaction wheel 6 rotates. By way of example, four surface-acoustic-wave elements 22 are denoted as 22-1 to 22-4, and the reaction recesses 6a are denoted similarly as 6a-1 to 6a-5 from the left in FIG. 2 so that each element can be distinguished from another.

In FIG. 2, the sound waves Wa emitted from the surface-acoustic-wave element 22-1 enter the reaction wheel 6 from the bottom wall, propagate through the wall, and come into the liquid L from side surfaces of the reaction recesses 6a-1 and 6a-2. Since the sound waves Wa coming into the reaction recess 6a-1 propagates through a long distance in the wall, the attenuation thereof is significant. The amount of incident sound waves Wa into the reaction recess 6a-1 is smaller than the amount of the sound waves Wa incident on the reaction recess 6a-2. Therefore, of sound flows simultaneously generated by the sound waves Wa emitted by the surface-acoustic-wave element 22-1, a sound flow F11 which is generated in the liquid L in the reaction recess 6a-1 in an anticlockwise direction has a lower flow rate than a sound flow F12 generated in the liquid L in the reaction recess 6a-2 in a clockwise direction. Further, of sound flows generated by the sound waves Wa emitted by the surface-acoustic-wave element 22-2, a sound flow F22 generated in the liquid L in the reaction recess 6a-2 in the anticlockwise direction has a smaller flow rate than a sound flow F23 generated in the liquid L in the reaction recess 6a-3 in the clockwise direction. The sound flows similarly generated in the liquid L in the reaction recesses 6a-3 to 6a-5 and their flow rates are indicated in FIG. 2.

In the agitation apparatus 20, when the surface-acoustic-wave elements 22-1 to 22-4 are simultaneously driven, sound flows asymmetrical about the center of the reaction recess are generated in all reaction recesses 6a, for example, the sound flow F12 and the sound flow F22 asymmetrical about the center of the reaction recess 6a-2 are generated in the liquid L of the reaction recess 6a-2 as shown in FIG. 2. Therefore, the agitation apparatus 20, and hence the automatic analyzing apparatus 1 including the agitation apparatus 20 does not generate a stagnant area in the held liquid L even when the capacity of the reaction recess 6a on the reaction wheel 6 is very small. In the reaction wheel 6, even when the side walls of the reaction recess 6a are not inclined and vertical, the position of the incidence of the sound waves emitted by the surface-acoustic-wave element 22 on the bottom surface changes according to the rotation, whereby asymmetrical sound flows are generated in the liquid L as described above. Thus, no stagnant area is generated in the held liquid even when the capacity of the reaction recess 6a is very small.

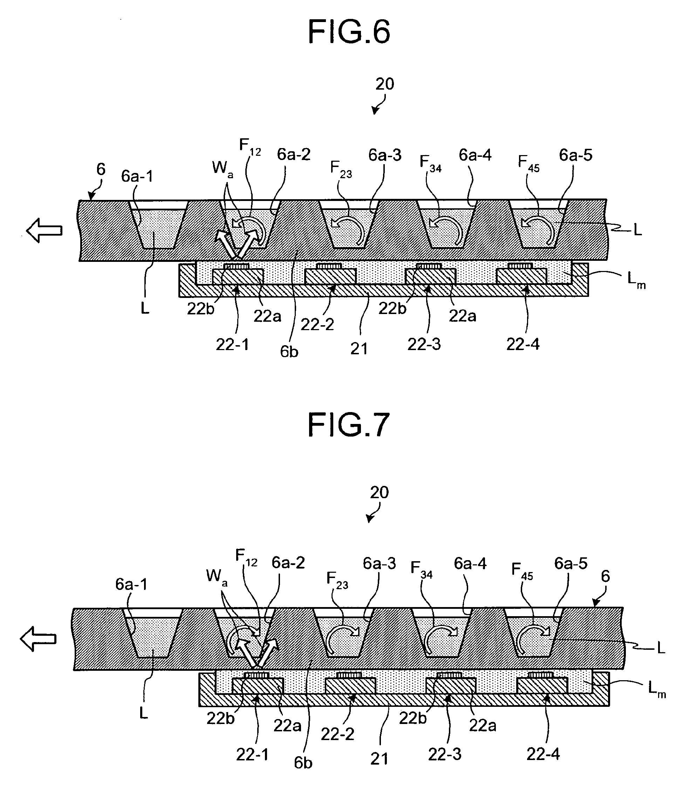

Further, when a time period t1 elapses and the reaction wheel 6 rotates from the position shown in FIG. 2 to a position shown in FIG. 6, the relative position of the reaction recess 6a with respect to the surface-acoustic-wave element 22 changes. In an example shown in FIG. 6, the surface-acoustic-wave element 22 emits the sound waves Wa in two directions in a plane symmetrical manner. One portion of the plane-symmetrical sound waves Wa propagates in one direction through the wall parallel to the inclined side wall of the reaction recess 6a, whereas another portion of the sound waves Wa propagates in another direction through the bottom wall of the reaction recess 6a and comes into the liquid L from the bottom surface. Therefore, in the agitation apparatus 20, when the surface-acoustic-wave elements 22-1 to 22-4 are driven simultaneously, the sound flows F12, F23, F34, and F45 are respectively generated in the anticlockwise direction in the liquids L in all the reaction recesses 6a positioned corresponding to the surface-acoustic-wave elements 22-1 to 22-4 as shown in FIG. 6.

Further, when a time period t2 elapses and the reaction wheel 6 rotates from a position shown in FIG. 6 to a position shown in FIG. 7, the relative position of the reaction recess 6a with respect to the surface-acoustic-wave element 22 changes again. Similarly to the case described above, one portion of the sound waves Wa emitted from the surface-acoustic-wave element 22 propagates through the wall parallel to the inclined side wall of the reaction recess 6a. Therefore, only another portion of the emitted sound waves Wa comes into the liquid L through the bottom surface. Hence, in the agitation apparatus 20, when the surface-acoustic-wave elements 22-1 to 22-4 are driven simultaneously, the sound flows F12, F23, F34, and F45 are generated in the liquids in the clockwise direction in the respective reaction recesses 6a corresponding to the positions of the surface-acoustic-wave elements 22-1 to 22-4 as shown in FIG. 7.

Thus, in the agitation apparatus 20 and the automatic analyzing apparatus 1, the direction of sound flow generated in the liquid L in the reaction recess 6a changes according to the rotated position of the reaction wheel 6, whereby the agitation effect of the liquid L held in the reaction recess 6a is enhanced, and the liquid L can be uniformly agitated. Further, in the agitation apparatus 20 and the automatic analyzing apparatus 1, the plural surface-acoustic-wave elements 22 disposed in the liquid bath 21 radiate the sound waves simultaneously to at least two reaction recesses 6a positioned in the direction of propagation of the sound waves. Therefore, the agitation apparatus 10 and the automatic analyzing apparatus 1 can uniformly agitate the liquid L held and transported in the reaction recess 6a using the surface-acoustic-wave elements 22 whose number is smaller than the number of reaction recesses 6a.

If the interval between the reaction recesses 6a along the circumferential direction of the reaction wheel 6 is equal to the interval between the vibrators 22b, and if the surface-acoustic-wave element 22 comes right below the reaction recess 6a or right below the center of two adjacent reaction recesses 6a due to the rotation of the reaction wheel 6, the sound waves Wa of the same amount are incident on the liquid in different directions in each reaction recess 6a. Therefore, the sound flows of the same flow rate are generated in different directions in the liquid in the reaction recess 6a to collide and offset with each other. As a result, the flow may sometimes become stagnant. However, such stagnation of the flow is only temporary and would not cause problems.

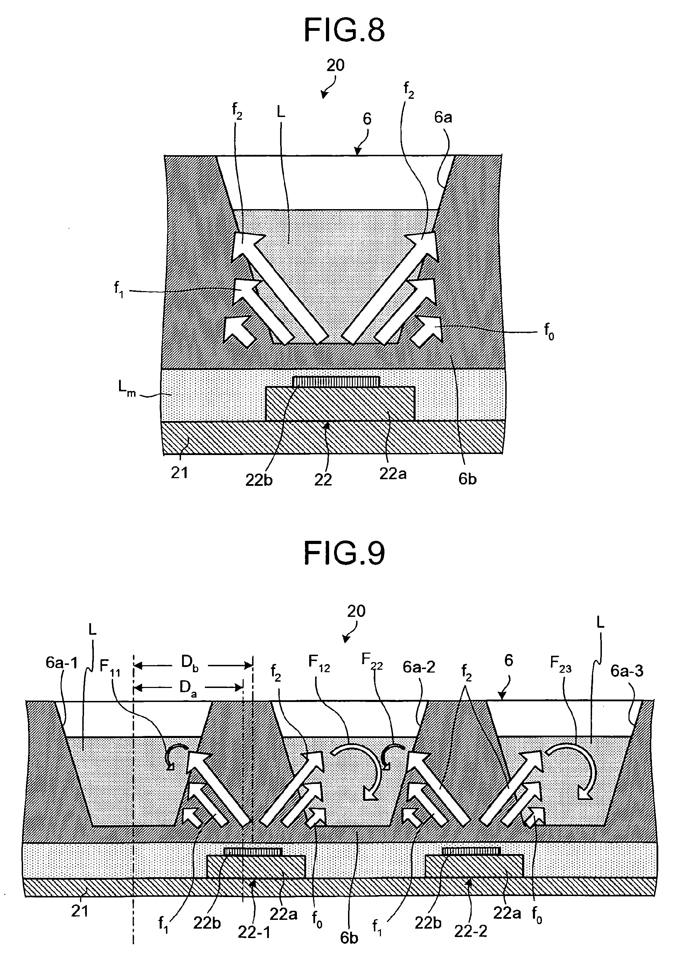

However, when the agitation controller 24 of the driving circuit 23 controls the oscillator 25 to change the frequency for driving the vibrator 22b between the resonance frequency and the antiresonant frequency, the interval between the sound waves from the surface-acoustic-wave elements 22 coming into the liquid through the bottom surface of the reaction recess 6a changes. For example, when the vibrator 22b is driven at a central frequency f0 (=(fr+fa)/2) which is a middle of the resonance frequency fr and the antiresonant frequency fa, the interval between the sound waves coming into the liquid is widest as shown in FIG. 8. As the frequency shifts away from the central frequency f0, the interval between the sound waves narrows. For example, when the vibrator 22b is driven at the frequencies f1 and f2 (f1<f0<f2, |f0-f1|<|f2-f0|), the interval between the sound waves coming into the liquid is narrowest when the vibrator 22b is driven at the frequency f2 as shown in FIG. 8.

Assume that a half of the interval between the reaction recesses 6a in the circumferential direction of the reaction wheel 6 is represented as Da, and an interval between the center of the vibrator 22b and the center of the reaction recess 6a is represented as Db (Da#Db) as shown in FIG. 9, and the surface-acoustic-wave elements 22 are driven at various frequencies f0, f1, and f2. Then, the interval of the sound waves coming into the liquid in the reaction recesses 6a-1 to 6a-3 changes according to the frequencies f0, f1, and f2, and the asymmetrical sound flows F12 and F22 are generated in the reaction recess 6a-2, thus the agitation efficiency can be improved according to the driving frequency of the surface-acoustic-wave element 22.

As can be seen from above, in the agitation apparatus 20, when the driving frequencies of the adjacent vibrators 22b are made different by the driving circuit 23, the direction of the sound flows generated in the liquid in the reaction recess 6a changes according to the rotated position of the reaction wheel 6, and in addition, the interval between the sound waves coming into the liquid can be changed. As a result, when the driving frequencies of the adjacent vibrators 22b are made different, the agitation apparatus 20 can minimize the influence of the temporary stagnation of the flow which occurs when the intervals between the reaction recesses 6a and the vibrators 22b in the circumferential direction of the reaction wheel 6 are the same, and in addition, asymmetrical property of the sound flows generated in the liquid held in the reaction recess 6a can be enhanced and the agitation efficiency of the liquid held in the reaction recess 6a can be further enhanced. Here, the driving frequency of the vibrator 22b is set to the frequency f2 which is largely different from the central frequency f0 when the amount of the liquid held in the reaction recess 6a is large, and set to the frequency close to the central frequency f0 when the amount of the liquid is small.

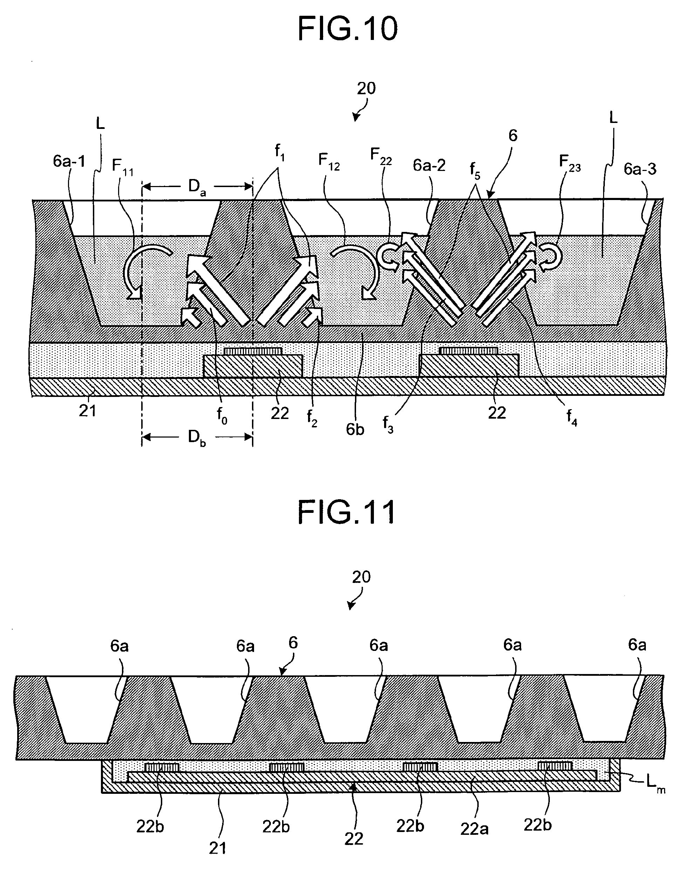

Therefore, the agitation apparatus 20 sets a half (Da) of the interval between each of the reaction recesses 6a-1 to 6a-3 in the circumferential direction of the reaction wheel 6 and the distance (Db) from the center of the vibrator 22b to the center of the reaction recess 6a equal to each other (Da=Db), for example, as shown in FIG. 10. Further, the agitation apparatus 20 sets the driving frequencies of the adjacent surface-acoustic-wave elements 22 to different frequencies, for example, by setting the central frequency and the driving frequency of the surface-acoustic-wave element 22-1 to f3, and f0, f1, and f2, and the central frequency and the driving frequency of the surface-acoustic-wave element 22-2 to f0, and f3, f4, and f5 (f5<f3<f2<f4<f0<f1). When the driving frequencies of the adjacent surface-acoustic-wave elements 22 are set to different frequencies, the agitation apparatus 20 can minimize the influence of the temporal stagnation of the flow, and at the same time, the asymmetrical property of the sound flows generated in the liquid held in the reaction recess 6a is further enhanced, whereby the agitation efficiency of the liquid held in the reaction recess 6a is enhanced.

As shown in FIG. 2, the plural surface-acoustic-wave elements 22 are arranged in the liquid bath 21 in the agitation apparatus 20. Alternatively, when the surface-acoustic-wave element 22 is configured with the single piezoelectric substrate 22a and the plural vibrators 22b arranged thereon as shown in FIG. 11 in the agitation apparatus 20, and the single piezoelectric substrate 22a is disposed in the liquid bath 21, handling of the plural surface-acoustic-wave elements 22 is not necessary and handling of only the single piezoelectric substrate 22a is sufficient, whereby the handling of the surface-acoustic-wave element is easier.

### Second Embodiment

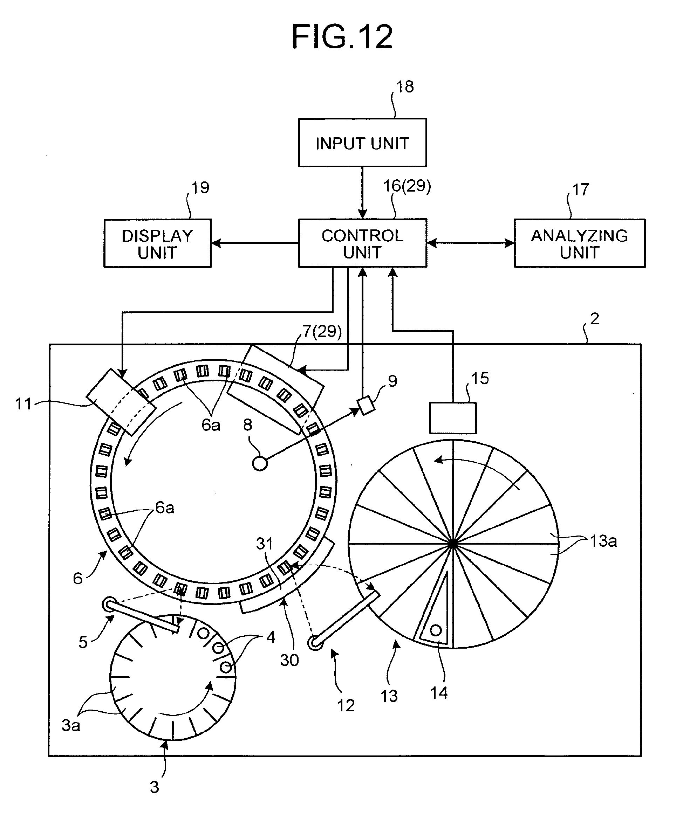

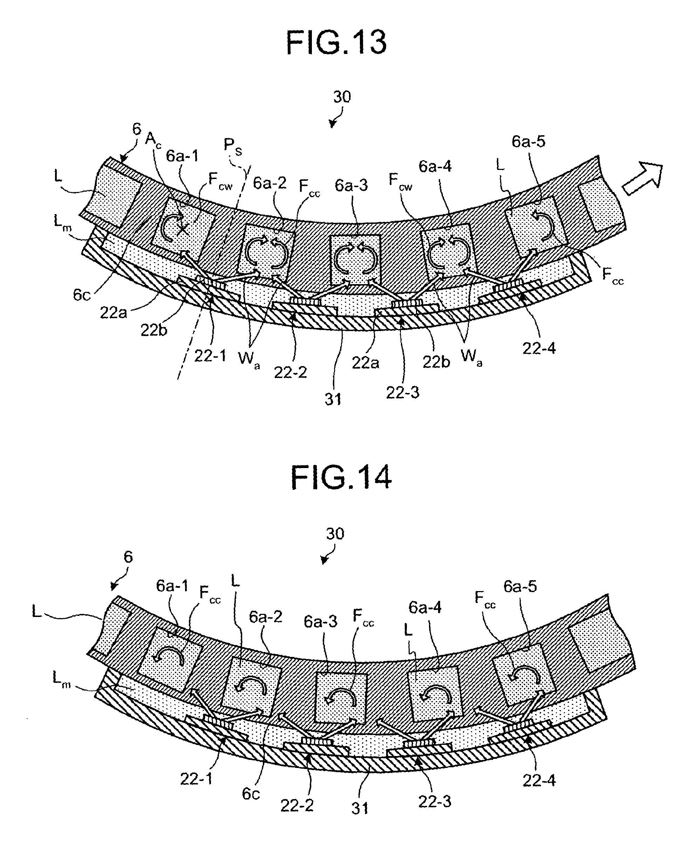

An agitation apparatus and an analyzing apparatus according to a second embodiment of the present invention will be described in detail below with reference to the accompanying drawings. While the agitation apparatus of the first embodiment includes the surface-acoustic-wave elements arranged at the side of the bottom surface of the reaction wheel 6, the agitation apparatus of the second embodiment includes the surface-acoustic-wave elements arranged at the side of the side surface of the reaction wheel 6. FIG. 12 is a schematic configuration diagram of an automatic analyzing apparatus according to the present invention including the agitation apparatus according to the second embodiment. FIG. 13 is a sectional view along a horizontal direction of a portion of the reaction wheel and the liquid bath in the automatic analyzing apparatus shown in FIG. 12. The automatic analyzing apparatus of the second embodiment is the same as the automatic analyzing apparatus of the first embodiment except the arrangement of the agitation apparatus. In the following description, the components of the second embodiment common to those of the automatic analyzing apparatus and the agitation apparatus of the first embodiment will be indicated by the same reference characters.

An agitation apparatus 30 of the second embodiment includes the reaction wheel 6, the plural surface-acoustic-wave elements 22, and the driving circuit 23 that drives the surface-acoustic-wave elements 22. The plural surface-acoustic-wave elements 22 are arranged in a liquid bath 31 holding the acoustic matching agent Lm such as gel and liquid, and further disposed at the side of an outer side surface of the reaction wheel 6. The acoustic matching agent Lm is adjusted so that a thickness thereof is a product of an odd number and 1/4 of a wavelength λ of a frequency emitted by the surface-acoustic-wave element 22, or that acoustic matching agent Lm is as thin as possible, in order to enhance the transmission efficiency of the sound waves to the wall surface of the reaction wheel 6. The surface-acoustic-wave element 22 is arranged between two adjacent reaction recesses 6a as shown in FIG. 13.
More specifically, the surface-acoustic-wave element 22 is arranged outside a side wall 6c so that the plane of symmetry Ps of the sound waves Wa is displaced from the central axis Ac of the reaction recess 6a. The liquid bath 31 is fixed onto the work table 2 outside the reaction wheel 6. Further, in the agitation apparatus 30, the interval between the reaction recesses 6a along the circumferential direction of the reaction wheel 6 is set equal to the interval between the vibrators 22b.

In the automatic analyzing apparatus 1 including the agitation apparatus 30, the specimen dispensing mechanism 5 sequentially dispenses the specimens in the plural specimen vessels 4 on the specimen table 3 into the reaction recesses 6a transported along the circumferential direction by the rotating reaction table 6. The reaction recess 6a in which the specimen is dispensed is transported to the vicinity of the reagent dispensing mechanism 12 by the rotation of the reaction wheel 6, and the reagent in the predetermined reagent vessel 14 is dispensed into the reaction recess 6a. After the reagent is dispensed into the reaction recess 6a, the reagent and the specimen are agitated by the agitation apparatus 30 and react while the reaction recess 6a is transported along the circumferential direction by the rotation of the reaction wheel 6, and the reaction recess 6a passes between the light source 8 and the light-receiving element 9. The liquid sample in the reaction recess 6a is subjected to photometry by the light-receiving element 9, and the analyzing unit 17 analyzes the constituent concentration and the like. After the analysis is finished, the reaction liquid in the reaction recess 6a is discharged by the discharge device 11, and the reaction recess 6a is washed by the washing device not shown and again used for the analysis of a specimen.

In the agitation apparatus 30, each surface-acoustic-wave element 22 simultaneously radiates the sound waves to two adjacent reaction recesses 6a positioned above the liquid bath 21 while the reaction wheel 6 rotates in the direction indicated by an arrow in FIG. 13. Therefore, the position of incidence of the sound waves emitted from the surface-acoustic-wave element 22 on the reaction wheel 6 through the side wall changes according to the relative position of the surface-acoustic-wave element 22 with respect to the reaction recess 6a as the reaction wheel 6 rotates. By way of example, four surface-acoustic-wave elements 22 are denoted as 22-1 to 22-4, and the reaction recesses 6a are denoted similarly as 6a-1 to 6a-5 from the left in FIG. 13 so that each element can be distinguished from another.

In FIG. 13, the sound waves Wa emitted from the surface-acoustic-wave element 22-1 enter the reaction wheel 6 from the side wall, propagate through the wall, and come into the liquid L from side surfaces of the reaction recesses 6a-1 and 6a-2. The same applies to other surface-acoustic-wave elements 22-2 to 22-4. The sound waves Wa emitted from the surface-acoustic-wave element 22-1, for example, are inclined relative to the side wall 6c and comes into the side wall 6c from two mutually plane-symmetrical directions. Here, since the sound waves Wa emitted by the surface-acoustic-wave element 22 are planar and enter the side wall 6c planarly, a line normal to the side wall 6c and passing through a middle point between sound waves incoming from two directions represents the plane of symmetry Ps. Further, each of the surface-acoustic-wave elements 22-1 to 22-4 is positioned between corresponding two adjacent reaction recesses among the reaction recesses 6a-1 to 6a-5. Therefore, as shown in FIG. 13, the sound flow Fcw is generated in the clockwise direction in the liquid L in the reaction recess 6a-1, and the sound flow Fcc is generated in the anticlockwise direction in the liquid L in the reaction recess 6a-5.

On the other hand, into the liquid L in each of the reaction recesses 6a-2 to 6a-4 positioned between the reaction recesses 6a-1 and 6a-5, the sound waves Wa of the same amount come from different directions from two adjacent ones of the surface acoustic wave elements 22-1 to 22-4 as shown in FIG. 13. Therefore, in the liquid L of each of the reaction recesses 6a-2 to 6a-4, the sound flow Fcc and the sound flow Fcw are generated. The sound flows Fcc and Fcw collide and offset with each other to cause stagnation in the flow.

Slightly before the reaction wheel 6 comes to the position shown in FIG. 13, for example, the sound flow Fcc of the anticlockwise direction is generated in the liquid L of each of the reaction recesses 6a-1 to 6a-5 as shown in FIG. 14. For example, the sound waves Wa emitted from the surface-acoustic-wave element 22-2 in an upper right direction and the sound waves Wa emitted from the surface-acoustic-wave element 22-3 in an upper left direction come into the reaction recess 6a-3 at a lower right corner as shown in the drawing. The sound waves Wa emitted from the surface-acoustic-wave element 22-2 in the upper right direction, after coming into the reaction recess 6a-3, is reflected by an inner wall surface and integrated with the sound waves Wa emitted from the surface-acoustic-wave element 22-3 in the upper left direction, whereby the sound flow Fcc of the anticlockwise direction is generated in the liquid L.

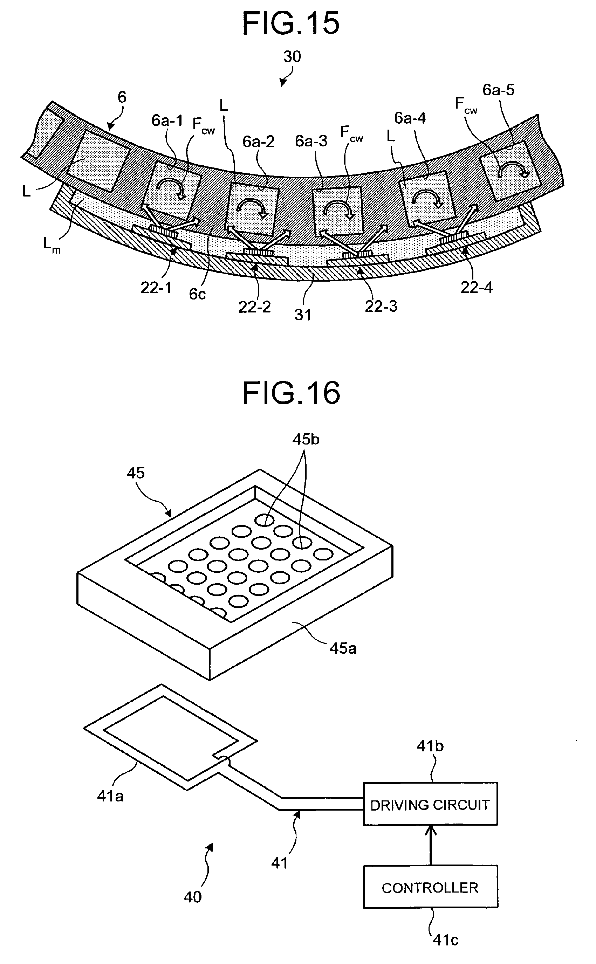

On the other hand, when the reaction wheel 6 further rotates from the position shown in FIG. 13 to the position shown in FIG. 15, the sound flow Fcw of the clockwise direction is generated in the liquid L of each of the reaction recesses 6a-1 to 6a-5. For example, the sound waves Wa emitted from the surface-acoustic-wave element 22-2 in an upper right direction and the sound waves Wa emitted by the surface-acoustic-wave element 22-3 in an upper left direction come into the reaction recess 6a-3 at a lower left corner as shown in the drawing. The sound waves Wa emitted from the surface-acoustic-wave element 22-3 in the upper left direction, after coming into the reaction recess 6a-3, is reflected by the inner wall surface to be superposed onto the sound wave Wa emitted from the surface-acoustic-wave element 22-2 in the upper right direction, whereby the sound flow Fcw in the clockwise direction is generated in the liquid L.

Therefore, the stagnation of the flow mentioned earlier is merely temporary. When the driving frequencies of the adjacent vibrators 22b are changed as described in the first embodiment, the agitation apparatus 30 can minimize the influence of the temporary stagnation of the flow caused when the interval between the reaction recesses 6a in the circumferential direction of the reaction wheel 6 and the interval between the vibrators 22b are the same.

Thus, in the agitation apparatus 30 and the automatic analyzing apparatus 1, the relative position of the reaction recess 6a with respect to the surface-acoustic-wave element 22 changes according to the rotated position of the reaction wheel 6, and the direction of sound flow generated in the liquid L in the reaction recess 6a is switched. Therefore, the agitation apparatus 30 and the automatic analyzing apparatus 1, similarly to the agitation apparatus 20 and the automatic analyzing apparatus 1 of the first embodiment, can enhance the agitation effect of the liquid L held in the reaction recess 6a and agitate the liquid L uniformly. Further, in the agitation apparatus 30, the plural surface-acoustic-wave elements 22 disposed in the liquid bath 31 radiate the sound waves to at least two of the reaction recesses 6a positioned in the direction of propagation of the sound waves. Therefore, the agitation apparatus 30 and the automatic analyzing apparatus 1 can uniformly agitate the liquid held and transported in the reaction recesses 6a using the surface-acoustic-wave elements 22 whose number is smaller than the number of the reaction recesses 6a. Further, since the agitation apparatus 30 and the automatic analyzing apparatus 1 include a smaller number of the surface-acoustic-wave elements 22 than the reaction recesses 6a, the manufacturing cost can be reduced.

The agitation apparatus 30 is arranged at the side of the outer side surface of the reaction wheel 6. Alternatively, however, the agitation apparatus 30 can be arranged at the side of an inner side surface as far as it does not incur inconveniences in arrangement. In the reaction wheel 6, only one row of the reaction recesses 6a is arranged along the circumferential direction. Alternatively, two rows of the reaction recesses 6a may be provided. Then, the automatic analyzing apparatus 1 may arrange the agitation apparatuses 30 on both at the side of the outer side surface and at the side of the inner side surface of the reaction wheel 6 so as to detect and analyze the reaction liquid in each of the reaction recesses 6a produced as a result of agitation and reaction of the reagent and the specimen using the light source 8 and the light-receiving element 9 arranged between two rows on the reaction wheel 6. One surface of the reaction recess 6a may be made of a mirror. The light source 8 emits two split light beams to the sides and makes each light beam incident on the reaction recess 6a. The light is reflected by a mirror surface opposite to the incident surface and detected by the light-receiving element 9 for analysis. Alternatively, in place of the light source 8 and the light-receiving element 9, an imaging unit such as a CCD camera may be arranged above the reaction wheel 6 to obtain image data, and the constituent concentration or the like of the specimen may be analyzed based on the image data.

### Third Embodiment

An agitation apparatus according to a third embodiment of the present invention will be described in detail below with reference to the accompanying drawings. In the first and the second embodiments, the plural liquid holders are provided in the reaction wheel 6 which also serves as a vessel. In the third embodiment, the plural liquid holders are arranged in a microtiter plate serving as a vessel.

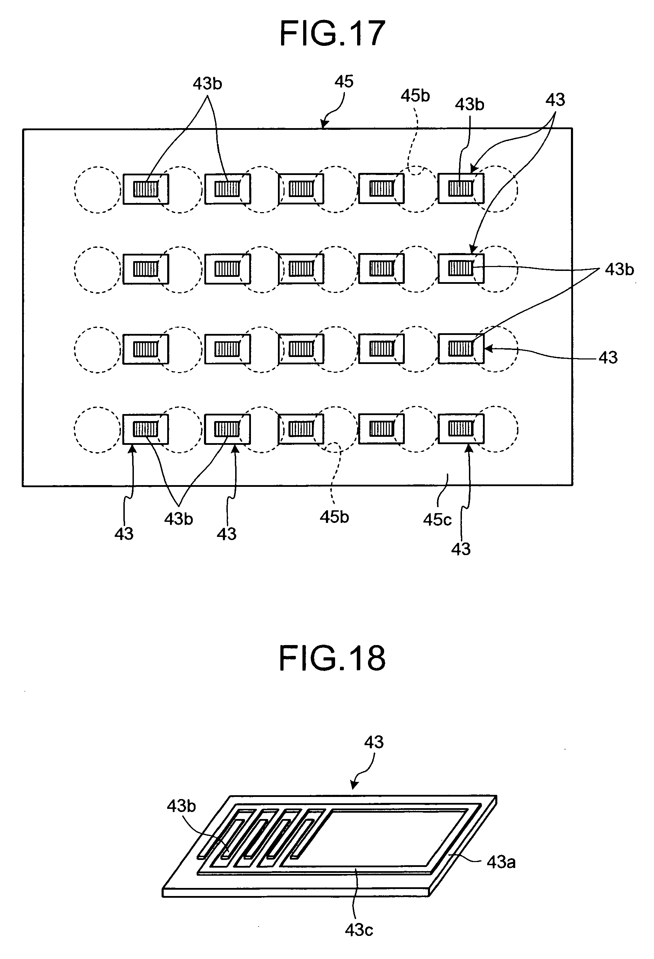

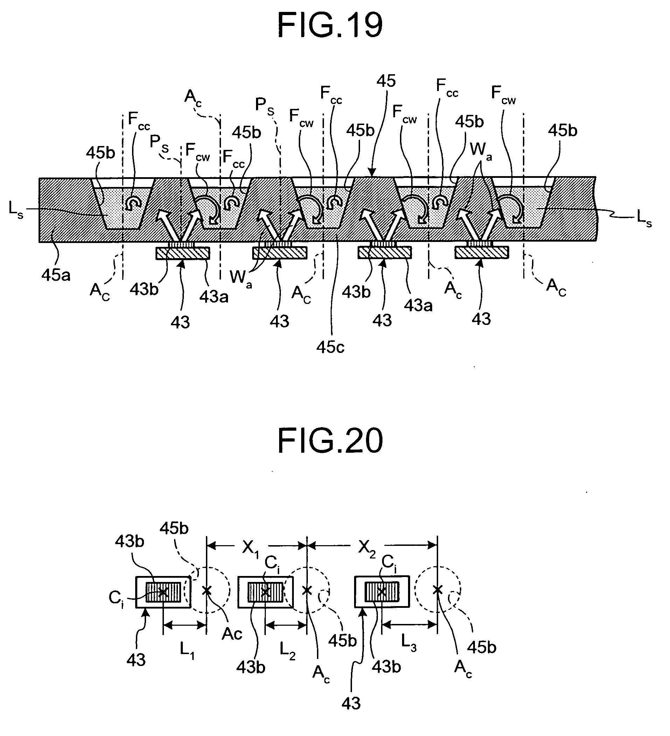

FIG. 16 is a perspective view of the agitation apparatus according to the third embodiment. FIG. 17 is a back view of the microtiter plate of the agitation apparatus shown in FIG. 16 on which the vibrators of the surface-acoustic-wave elements are arranged. FIG. 18 is an enlarged perspective view of the surface-acoustic-wave element used in the microtiter plate shown in FIG. 16. FIG. 19 is a partial sectional view of the microtiter plate in a longitudinal direction thereof along a center of a well.

An agitation apparatus 40 agitates the liquid by radiating the sound waves, and includes, as shown in FIGS. 16 and 17, a microtiter plate (hereinafter simply referred to as "microplate") 45 and a surface-acoustic-wave element 43 arranged on a bottom surface of the microplate 45, and agitates liquid samples held in plural wells 45b serving as liquid holders.

As shown in FIGS. 16 and 17, the microplate 45 has a main body 45a formed in a rectangular shape and the plural wells 45b formed like a matrix on an upper surface of the main body 45a and serving as holders of a liquid sample. The microplate 45 is a reaction vessel which causes a reaction of a reagent and a specimen such as blood and bodily fluid dispensed in each well 45b, and analyzes constituent concentration of the specimen and the like by performing optical measurement of the reaction liquid. The microplate 45 shown in the drawing has 4x6 wells 45b. The microplate 45, however, may have various numbers of the wells 45b. The same applies to other microplate described below.

A power transmission element 41 is supported by a position controlling member (not shown) which controls a distance to the microplate 45 and a two-dimensional position along a plate surface of the microplate 45. As shown in FIG. 16, the power transmission element 41 includes an RF transmission antenna 41a arranged opposite to the plural surface-acoustic-wave elements 43, a driving circuit 41b, and a controller 41c. The driving circuit 41b is a driving unit that drives the surface-acoustic-wave element 43, and includes the oscillator 25 and the amplifier 26 of the driving circuit 23 of the first embodiment. The agitation controller 24 of the first embodiment is employed as the controller 41c. The power transmission element 41 transmits power supplied from an alternate-current power source to the surface-acoustic-wave element 43 as electric waves through the RF transmission antenna 41a while moving in the two-dimensional directions along the plate surface of the microplate 45. While the power transmission element 41 transmits the power to the surface-acoustic-wave element 43, the position controlling member adjusts the relative position of the power transmission element 41 so that the RF transmission antenna 41a faces an antenna 43c mentioned later of the surface-acoustic-wave element 43.

The surface-acoustic-wave element 43 is a sound wave generator attached to a lower surface of a bottom wall 45c of the microplate 45 via an acoustic matching layer (not shown) of epoxy resin or the like. As shown in FIG. 18, the surface-acoustic-wave element 43 includes a piezoelectric substrate 43a of lithium niobate (LiNbO3) or the like, a vibrator 43b formed of an interdigital transducer (IDT), and an antenna 43c serving as a power receiving unit, and the vibrator 43b and the antenna 43c are arranged integrally on the surface of the piezoelectric substrate 43a. As shown in FIG. 19, the surface-acoustic-wave element 43 is attached to the lower surface of the bottom wall 45c of the microplate 45 so that the plane of symmetry Ps of the sound waves Wa is displaced from the central axis Ac of the well 45b. Therefore, the sound waves Wa generated by the surface-acoustic-wave element 43 are inclined relative to the bottom wall 45c and incident on the bottom wall 45c from two mutually plane-symmetrical directions as shown in the drawing. Since the sound waves Wa emitted from the surface-acoustic-wave element 43 are planar and incident on the bottom wall 45c planarly, a line normal to the bottom wall 45c and passing through a middle point between incoming sound waves from two directions represents the plane of symmetry Ps. The surface-acoustic-wave element 43 is arranged at a position between the two adjacent wells 45b and off from the center between two adjacent wells 45b.

In the agitation apparatus 40 configured as described above, the power transmission element 41 transmits electric waves from the RF transmission antenna 41a under the control of the controller 41c when the RF transmission antenna 41a faces the antenna 43c. Then; the antenna 43c of the surface-acoustic-wave element 43 arranged opposite the power transmission element 41 receives the electric waves, whereby electromotive force is generated by resonance. In the agitation apparatus 40, the electromotive force generates surface acoustic waves (ultrasounds) in the vibrator 43b which propagate through the acoustic matching layer to an interior of the main body 45a of the microplate 45, and leak out to the liquid sample which has close acoustic impedance.

In the agitation apparatus 40, the surface-acoustic-wave element 43 is attached to the lower surface of the bottom wall 45c of the microplate 45 so that the plane of symmetry Ps of the sound waves Wa is displaced from the central axis Ac of the well 45b. Therefore, a propagation distance of the sound waves emitted from one of the adjacent surface-acoustic-wave elements 43 through the wall of the well 45b is different from a propagation distance of the sound waves emitted from another of the adjacent surface-acoustic-wave elements 43, in other words, an amount of attenuation of the sound waves is different, whereby the amounts of the sound waves incident on the same well 45b are different.

As a result, the sound flow Fcw of the clockwise direction and the sound flow Fcc of the anticlockwise direction having a smaller flow rate than the sound flow Fcw are generated asymmetrically in the liquid sample Ls held in the well 45b as shown in FIG. 19. Thus, the liquid sample Ls including the reagent and the specimen dispensed to each well 45b is agitated uniformly without generating a stagnant area. Here, if the frequency of the electric waves transmitted from the RF transmission antenna 41a to the antenna 43c is changed between the resonance frequency fr and the antiresonant frequency fa, the interval of the sound waves incident on the liquid sample Ls held in the well 45b changes, whereby the asymmetrical property of the sound flows generated in the liquid sample Ls is enhanced, and the agitation efficiency of the liquid sample Ls held in the well 45b can be enhanced.

Then, an imaging unit such as a CCD camera picks up images of the liquid sample Ls obtained as a result of agitation and reaction of the reagent and the specimen from above the microplate 45. Constituents of the specimen are analyzed based on the obtained image data.

The agitation apparatus 40 transmits the power in a non-contact manner from the power transmission element 41 to the surface-acoustic-wave element 43 attached to the microplate 45 utilizing the RF transmission antenna 41a and the antenna 43c as described above, so as to agitate the reagent and the specimen dispensed into the plural wells 45b. In the agitation apparatus 40, the surface-acoustic-wave element 43 is arranged between two adjacent wells 45b. In other words, in the agitation apparatus 40, the surface-acoustic-wave element 43 is attached to the lower surface of the bottom wall 45c of the microplate 45 so that the plane of symmetry Ps of the sound waves Wa is displaced from the central axis Ac of the well 45b. Therefore, even when the amount of the liquid sample Ls is very small or the well 45b is very small or thin, the agitation apparatus 40 can uniformly agitate the held liquid sample Ls using the surface-acoustic-wave elements 43 whose number is smaller than the number of wells 45b without generating a stagnant area in the held liquid sample Ls. Further, since the agitation apparatus 40 can perform uniform agitation using the surface-acoustic-wave elements 43 whose number is smaller than the number of wells 45b, the manufacturing cost can be reduced.

In the microplate 45 used in the agitation apparatus 40, the interval between the wells 45b and the distance between the surface-acoustic-wave element 43 and the well 45b do not always need to be constant as far as the plane of symmetry Ps of the sound waves Wa is displaced from the central axis Ac of the well 45b. For example, assume that the longitudinal direction of the microplate 45 shown in FIG. 17 is an x-axis direction, and a direction perpendicular to the longitudinal direction is a y-axis direction. As shown in FIG. 20, intervals between the adjacent wells 45b in the x-axis direction may be set to different values such as X1, X2, and so on, and the distance between a center Ci where the sound wave is generated in each vibrator 43b and a center of each well 45b may be all set to different values, such as L1, L2, L3, and so on.

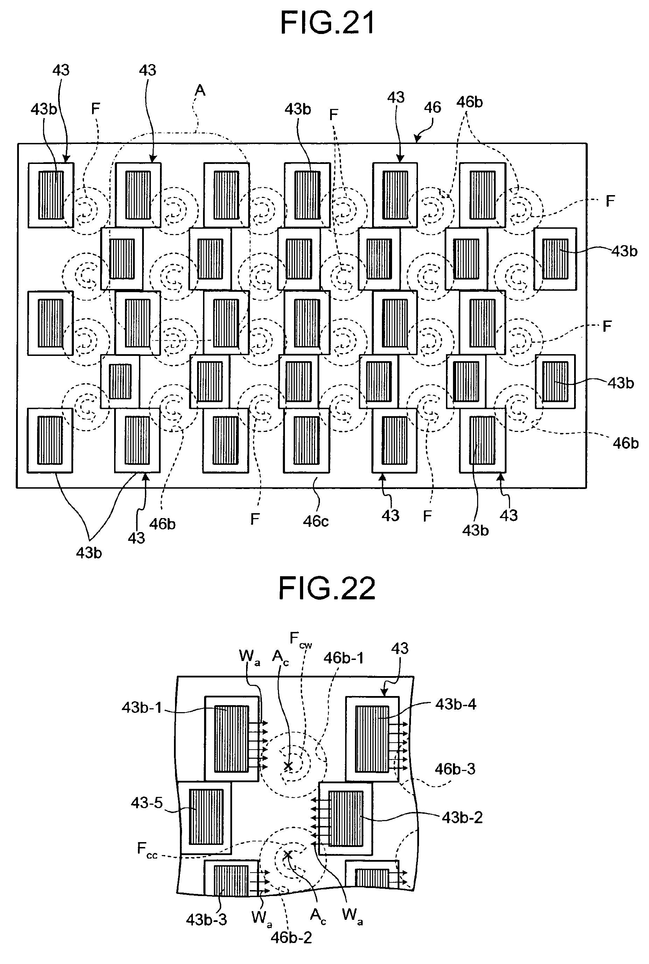

Further, in the microplate used in the agitation apparatus 40, plural vibrators 43b may be arranged for each well 46b as far as the plane of symmetry of the sound waves is displaced from the central axis of the well, more specifically, as shown in a microplate 46 of FIG. 21, two vibrators 43b may be arranged opposite to each other across the central axis Ac displaced from the central axis Ac of each of the plural wells 46b arranged like a matrix. The surface-acoustic-wave element is attached to a bottom wall 46c via the acoustic matching layer (not shown) of epoxy resin or the like. Then, as shown in FIG. 22 which is an enlarged view of a portion A in FIG. 21, the liquid held in a well 46b-1 is agitated by the sound waves Wa emitted from vibrators 43b-1 and 43b-2 arranged opposite to each other across the central axis Ac.

As shown in FIG. 22, nearly half of the sound waves Wa emitted from the vibrator 43b-1 is incident on the well 46b-1. On the other hand, the sound waves Wa emitted from the vibrator 43b-2 are emitted in a direction 180° off from the direction of emission of the sound wave Wa of the vibrator 43b-1, and nearly half thereof is incident on a well 46b-2 while nearly half of the rest propagates through the bottom wall. Therefore, in comparison with the sound waves Wa emitted from the vibrator 43b-1, only a small amount of the sound waves Wa emitted from the vibrator 43b-2 is incident on the well 46b-1. Thus, the sound flow Fcw of the clockwise direction is generated in the liquid in the well 46b-1 as shown in the drawing.

On the other hand, as shown in FIG. 22, a larger amount of sound waves Wa is incident from the vibrator 43b-2 than from a vibrator 43b-3 on the well 46b-2, whereby the sound flow Fcc of the anticlockwise direction is generated. As shown in FIG. 22, a vibrator 43b-4 also emits the sound waves Wa. However, most of the sound wave Wa from the vibrator 43b-4 is incident on a well 46b-3. Further, since there is a distance to the well 46b-1, the sound wave Wa emitted to the side of the well 46b-1 is attenuated during the propagation in the wall. As a result, energy that is incident on the well 46b-1 is relatively significantly small. Similarly, energy of the sound waves emitted from a vibrator 43b-5 and incident on the wells 46b-1 and 46b-2 are relatively small. As a result, a sound flow F is generated in a different direction in each column of the microplate 46 as shown in FIG. 21.

The agitation apparatus 40 using the microplate 46 can uniformly agitate the held liquid using the surface-acoustic-wave elements 43 without generating a stagnant area in the held liquid even when the liquid sample is very small and the well 46b is very small or thin.

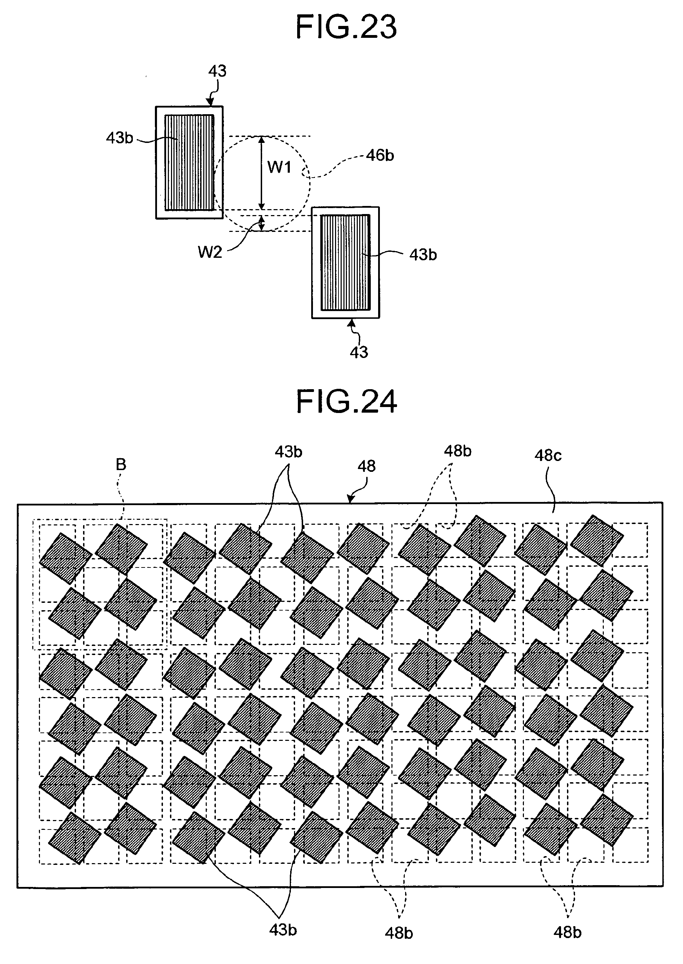

In the microplate 46, widths W1 and W2 of incidence of the sound waves emitted by two vibrators 43b arranged opposite to each other across the central axis Ac (see FIG. 22) on the well 46b can be freely changed with the change in positions of the vibrators 43b of the surface-acoustic-wave elements on the bottom wall 46c as shown in FIG. 23. Therefore, the microplate 46 can adjust the flow rate of the sound flow generated in each well 46b.

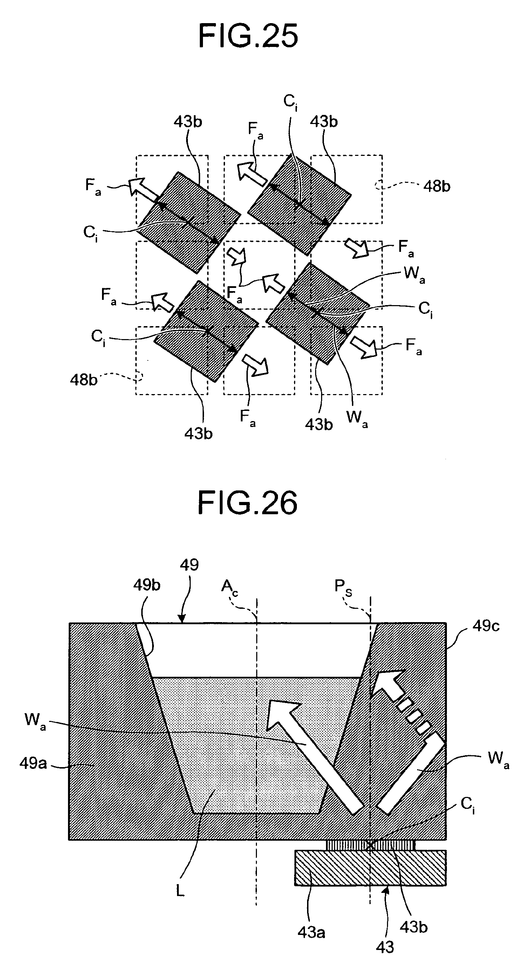

Further, in the microplate used in the agitation apparatus 40, square-columnar wells 48b may be arranged in a matrix while each vibrator 43b is displaced from each of the centers of two adjacent wells 45b and arranged so as to cover plural wells 48b, and plural surface-acoustic-wave elements may be arranged on a bottom surface 45c via an acoustic matching layer (not shown) of epoxy resin or the like, as shown in a microplate 48 of FIG. 24, as far as the plane of symmetry of the sound waves is displaced from the central axis of the well. In FIGS. 24 and 25, a contour line of the surface-acoustic-wave element 43 (i.e., piezoelectric substrate 43a) is not shown for the simplicity of description.

Thus, in the agitation apparatus 40 including the microplate 48, when the surface-acoustic-wave element 43 is driven, each of the vibrators 43b emits sound waves Wa from the center Ci in a symmetrical manner as shown in FIG. 25 which is an enlarged view of a portion B shown in FIG. 24. Since the plane of symmetry Ps of the sound waves Wa is displaced from the central axis Ac of the well 48b, and each of the vibrators 43b is arranged off from the centers of two adjacent wells 48b, a distance of propagation of the sound waves propagating through the wall, in other words, the amount of attenuation of the sound waves varies. Hence, in the microplate 48, the sound flows Fa are generated asymmetrically in the liquid held in each well 48b and the sound flows Fa have different flow rates depending on the distances of propagation in the wall of the sound waves Wa emitted from the plural vibrators 43b. Therefore, the agitation apparatus 40 can uniformly agitate the held liquid by the surface-acoustic-wave elements 43 whose number is smaller than the number of the wells 48b without generating a stagnant area in the held liquid even when the amount of the liquid sample is very small, or the well 48b is very small or very thin.

Here, a sound flow whose flow rate is even smaller than the sound flow Fa shown in the drawing is additionally generated in the liquid held in each well 48b due to the leakage of the sound waves emitted from the adjacent surface-acoustic-wave element 43. These sound flows are not shown in the drawing because these sound flows rarely contribute to the agitation of the liquid due to their low flow rate.

Agitation apparatuses described as the first to the third embodiments above agitate the liquid held in each liquid holder by generating the sound waves from such a position that the plane of symmetry of the sound waves is displaced from the central axes of the plural liquid holders. The agitation apparatus of the present invention, however, may include a single liquid holder and a single sound wave generator as far as the sound waves are generated from such a position that the plane of symmetry of the sound wave is displaced from the central axis of the liquid holder.

Therefore, the agitation apparatus of the present invention may include an agitation vessel 49 in which one recess 49b which serves as a liquid holder is formed in a main body 49a as shown by the agitation apparatus 40 of FIG. 26. In the agitation vessel 49, the surface-acoustic-wave element 43 is attached to the bottom surface of the agitation vessel 49 via the acoustic matching layer in such a manner that the center Ci of the vibrator 43b is displaced from the central axis Ac of the recess 49b. Thus, in the agitation vessel 49, the surface-acoustic-wave element 43 generates the sound waves Wa from such a position that the plane of symmetry Ps of the sound waves Wa is displaced from the central axis Ac of the recess 49b. Of the sound waves emitted in two directions, namely, to the right and to the left, from the center of the vibrator 43b relative to the plane of symmetry Ps, one portion of the sound waves Wa which is directed to the side of the recess 49b is incident on the liquid L at a position away from the central axis Ac. On the other hand, another portion of the sound waves Wa which is directed to the side of a side wall 49c, after being reflected by the side wall 49c, is incident on the liquid L in the recess 49c, however, the sound waves Wa cannot come into a space in the recess 49b where the liquid L does not exist.

When the number of vessels, or the number of liquid holders in one vessel increases, the number of surface-acoustic-wave elements in the analyzing apparatus must be increased in accordance with the number of vessels or liquid holders. Then, the manufacturing cost increases in accordance with the increase in the number of vessels or the like. In the analyzing apparatus of the present invention, however, since the surface-acoustic-wave element is arranged between the liquid holders, the surface-acoustic-wave elements fewer than the liquid holders can uniformly agitate the liquid. In addition, the decreased number of surface-acoustic-wave elements makes the manufacturing cost low.

### INDUSTRIAL APPLICABILITY

As can be seen from the foregoing, the agitation apparatus and the analyzing apparatus according to the present invention are useful for uniformly agitating the liquid held in the liquid holder without generating a stagnant area in the held liquid even when the amount of the liquid held in the liquid holder is very small or the liquid holder is very small or very thin, in particular, the agitation apparatus and the analyzing apparatus according to the present invention are suitable for uniformly agitating a reagent and a specimen using the surface-acoustic-wave elements whose number is smaller than the number of the liquid holders.

### (Note)

Further, various configurations of the present invention can be extracted from the embodiments described above, wherein a feature recited in a following note may be realized, or features recited in following notes are combined.

### (Note 1)

An agitation apparatus for agitating a liquid by radiating a sound wave, comprising:
plural liquid holders that hold a liquid; and
a sound wave generator that is arranged between at least two of the liquid holders to radiate the sound wave to the two liquid holders.

### (Note 2)

The agitation apparatus according to note 1, wherein
the sound wave generator simultaneously radiates the sound wave to at least two of the liquid holders that are positioned in a direction of propagation of the sound wave.

### (Note 3)

The agitation apparatus according to note 1, wherein
there are a plurality of the sound wave generators, and a number of the sound wave generators is smaller than a number of the plural liquid holders.

### (Note 4)

The agitation apparatus according to note 1, wherein
the sound wave generator is arranged between two adjacent ones of the liquid holders.

### (Note 5)

The agitation apparatus according to note 4, wherein
the sound wave generator is arranged displaced from a center of each of the two adjacent ones of the liquid holders.

### (Note 6)

The agitation apparatus according to note 3, wherein
the plural liquid holders are formed in one vessel, and
the sound wave generator is arranged at a side of a bottom surface of the vessel.

### (Note 7)

The agitation apparatus according to note 3, wherein
the plural liquid holders are formed in one vessel, and
the sound wave generator is arranged at a side of a side surface of the vessel.

### (Note 8)

The agitation apparatus according to note 6 or 7, wherein
the vessel rotates so that a relative position of the sound wave generator relative to the liquid holder changes.

### (Note 9)

The agitation apparatus according to note 1, wherein
the sound wave generator is a surface-acoustic-wave element that generates surface acoustic waves as the sound wave.

### (Note 10)

An analyzing apparatus for analyzing a reaction liquid by agitating and causing a reaction of plural different types of liquids using an agitation apparatus according to any one of notes 1 to 9.

## Claims

1. An agitation apparatus for agitating a liquid by radiating a sound wave, comprising:
a liquid holder that holds a liquid; and
a sound wave generator that is arranged at an outer side of a wall of the liquid holder to make sound waves directed in two mutually plane-symmetrical directions each at an angle with the wall incident on the wall, wherein
the sound wave generator generates the sound wave from such a position that a plane of symmetry of the sound wave is displaced from a central axis of the liquid holder.

2. The agitation apparatus according to claim 1, wherein
there is a plurality of the sound wave generators, and
a frequency of the sound wave generated by one of the sound wave generators is different from a frequency of the sound wave generated by another one of the sound wave generators adjacent to the one in a direction of propagation of the sound wave.

3. The agitation apparatus according to claim 2, wherein
any two adjacent sound wave generators aligned in the direction of propagation of the sound wave have a different central frequency from each other.

4. The agitation apparatus according to claim 1, wherein
there is a plurality of the liquid holders, and
a distance from a center of sound wave generation to a central axis of each of the liquid holders is different in each of the sound wave generators.

5. The agitation apparatus according to claim 1, further comprising
a frequency setting unit that sets a frequency of the sound wave generated by the sound wave generator, and
the frequency setting unit changes over time the frequency of the sound wave generated by the sound wave generator.

6. The agitation apparatus according to claim 5, wherein
the frequency setting unit changes the frequency of the sound wave generated by the sound wave generator according to one of a property and an amount of the liquid to be agitated.

7. The agitation apparatus according to claim 5, wherein
the frequency setting unit performs one of modulation of the sound wave generated by the sound wave generator and frequency sweep and frequency switching of the frequency of the sound wave generated by the sound wave generator.

8. The agitation apparatus according to claim 5, wherein
the frequency setting unit changes the frequency of the sound wave generated by the sound wave generator between a resonance frequency and an antiresonant frequency.

9. The agitation apparatus according to claim 1, further comprising
a position controller that changes a relative position of the sound wave generator relative to the liquid holder.

10. The agitation apparatus according to claim 9, wherein
the position controller changes the relative position of the sound wave generator relative to the liquid holder that holds a liquid to be agitated according to one of a property and an amount of the liquid to be agitated.

11. The agitation apparatus according to claim 9, wherein
the position controller moves a position of the liquid holder relative to the sound wave generator.

12. The agitation apparatus according to claim 1, wherein
the sound wave generator is a surface-acoustic-wave element that generates a surface acoustic wave as the sound wave.

13. An analyzing apparatus for analyzing a reaction liquid by agitating and causing a reaction of plural different types of liquids using an agitation apparatus according to any one of claims 1 to 12.
